# EUROPEAN PATENT SPECIFICATION

(11) **EP 3 591 340 B1**
(45) Date of publication and mention of the grant of the patent: **20.07.2022**
(21) Application number: 18761110.8
(22) Date of filing: 23.02.2018
(51) Int. Cl.: G01D 1/18, G01D 21/00, G08B 21/14, G08B 29/18, G01K 3/00, G08B 17/00

(54) **SENSOR CIRCUIT, METHOD OF OPERATING THE SENSOR CIRCUIT AND SENSOR DEVICE PROVIDED WITH SENSOR CIRCUIT**
SENSORSCHALTUNG, VERFAHREN ZUM BETRIEB DER SENSORSCHALTUNG UND SENSORVORRICHTUNG MIT DER SENSORSCHALTUNG
CIRCUIT DE CAPTEUR, PROCÉDÉ DE COMMANDE DU CIRCUIT DE CAPTEUR ET DISPOSITIF DE CAPTEUR ÉQUIPÉ DU CIRCUIT DE CAPTEUR

(30) Priority: 02.03.2017 JP 2017039852
(43) Date of publication of application: 08.01.2020
(73) Proprietor: Panasonic Intellectual Property Management Co., Ltd., Osaka-shi, Osaka 540-6207 (JP)
(72) Inventor: SHIMADA, Yoshitake, Osaka-shi, Osaka 540-6207 (JP)
(74) Representative: Appelt, Christian W.
(86) International application number: PCT/JP2018/006726
(87) International publication number: WO 2018/159495

(56) References cited:
- JP-A- H04 294 229
- JP-A- 2008 268 025
- JP-A- 2015 169 538
- JP-A- 2015 169 538
- US-A- 3 769 605
- US-A1- 2010 302 385

## Description

### Technical Field

The present invention generally relates to a sensor circuit, a method for processing the sensor circuit, and a sensor device including the sensor circuit, and more particularly relates to a sensor circuit for processing an output voltage of a sensor, a method for processing such a sensor circuit, and a sensor device including the sensor circuit.

### Background Art

A battery powered alarm, including a gas sensor for detecting a gas to be detected, has been known in the art (see, for example, Patent Literature 1). The battery powered alarm of Patent Literature 1 includes a battery section, a power supply circuit section, and a control circuit section. The control circuit section determines, based on a sensor output voltage of a gas sensor, whether or not there is any leakage of a gas to be detected. When the control circuit section determines that there is any gas leakage, the alarm sounds an alert to the gas leakage. The power supply circuit section stabilizes the output voltage, supplied from the battery section, to a constant voltage, and then supplies the constant voltage to the control circuit section.

The battery powered alarm of Patent Literature 1 includes the power supply circuit section for stabilizing the output voltage of the battery section. Thus, the power consumption of the power supply circuit section accelerates the depletion of the battery section, which is not beneficial.

US 2010/302385 A1 discloses an angular velocity sensor including a sensor device and an amplification circuit. The sensor device generates a detection signal corresponding to an angular velocity. The amplification circuit generates both a first output signal by non-inverting amplifying the detection signal with a first gain and a second output signal by inverting-amplifying the detection signal with the first gain, and outputs the first output signal and the second output signal in order to obtain an angular velocity signal by calculating a difference between the first output signal and the second output signal.

US 3 769 605 A discloses an operational amplifier or feedback circuit comprises a high gain amplifier for receiving the circuit input and for providing an output in response thereto.

### Citation List

### Patent Literature

Patent Literature 1: JP 2013-178649 A

### Summary of Invention

It is therefore an object of the present invention to provide a sensor circuit with the ability to cut down the power consumption, a method for processing such a sensor circuit, and a sensor device including such a sensor circuit.

A sensor circuit according to an aspect of the present invention includes an amplifier section and an output unit. The amplifier section amplifies an output voltage of a sensor, and provides an output voltage as a sum of the amplified output voltage of the sensor and a reference voltage. The output unit provides an output voltage based on a differential voltage between a first output voltage and a second output voltage. The first output voltage has a value of the output voltage of the amplifier section when the amplifier section has its amplification factor set at a first amplification factor. The second output voltage has another value of the output voltage of the amplifier section when the amplifier section has its amplification factor set at a second amplification factor.

A method for operating a sensor circuit according to another aspect of the present invention is a method for processing a sensor circuit including an amplifier section configured to amplify an output voltage of a sensor and provide an output voltage as a sum of the amplified output voltage of the sensor and a reference voltage. The method includes providing an output voltage based on a differential voltage between a first output voltage and a second output voltage. The first output voltage has a value of the output voltage of the amplifier section when the amplifier section has its amplification factor set at a first amplification factor. The second output voltage has another value of the output voltage of the amplifier section when the amplifier section has its amplification factor set at a second amplification factor.

A sensor device according to still another aspect of the present invention includes: the sensor circuit described above; and the sensor configured to provide the output voltage to the amplifier section.

### Brief Description of Drawings

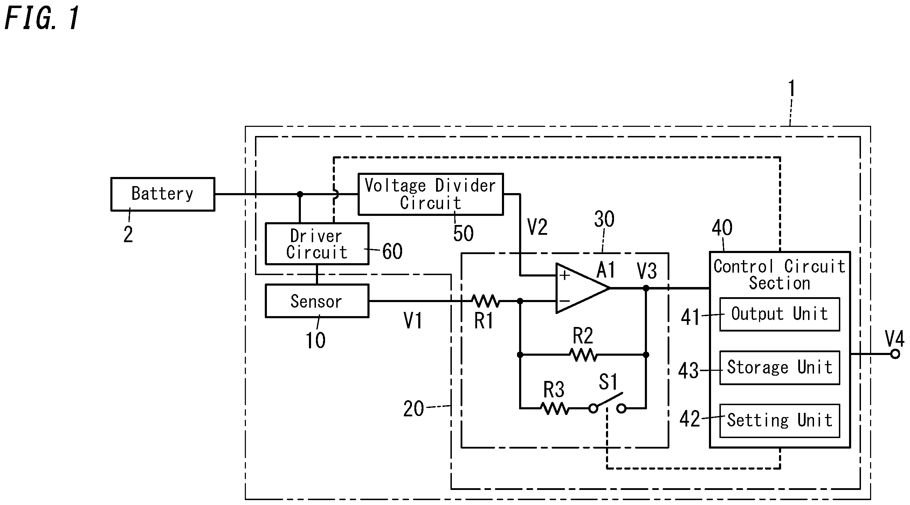

FIG. 1 is a block diagram of a sensor device according to an exemplary embodiment of the present invention;
FIG. 2 is a timing diagram illustrating how the sensor device performs a detection operation;
FIG. 3 illustrates how the relationship between a first output voltage and a second output voltage changes in the sensor device depending on whether the battery voltage is high or low; and
FIG. 4 is a block diagram of a sensor device according to a first variation of the exemplary embodiment of the present invention.

### Description of Embodiments

### (1) Configuration

A sensor device 1 according to an exemplary embodiment includes a sensor 10 and a sensor circuit 20. The sensor device 1 according to this embodiment may be used in a gas sensor designed to set off an alarm when finding the concentration of a gas to be detected (such as a carbon monoxide gas) exceeding a predetermined threshold concentration. A power supply for the sensor device 1 according to this embodiment is a battery 2. That is to say, the sensor device 1 is powered by the battery 2.

The sensor 10 may be implemented as a gas sensor that provides an output voltage V1 with a voltage value representing the gas concentration of a gas to be detected (e.g., a carbon monoxide gas according to this embodiment). In this embodiment, the sensor 10 is implemented as an electrochemical gas sensor. However, this is only an example and should not be construed as limiting. The sensor 10 may also be a semiconductor gas sensor that uses a metal-oxide semiconductor material, or may also be a contact burning gas sensor as well.

The sensor circuit 20 includes an amplifier section 30, a control circuit section 40, a voltage divider circuit 50, and a driver circuit 60.

The driver circuit 60 drives the sensor 10 with the power supplied from the battery 2. The driver circuit 60 supplies power to the sensor 10 in response to a control signal from the control circuit section 40, thereby driving the sensor 10.

The voltage divider circuit 50 divides the voltage provided by the battery 2 by a predetermined voltage division ratio to output a reference voltage V2 proportional to the voltage of the battery 2.

The amplifier section 30 includes a current-voltage converting amplifier A1, resistors R1-R3, and a switching element S1. The non-inverting input terminal of the current-voltage converting amplifier A1 receives the reference voltage V2 from the voltage divider circuit 50 such that the potential at the non-inverting input terminal is biased toward the reference voltage V2. The inverting input terminal of the current-voltage converting amplifier A1 is connected to an output terminal of the sensor 10 via the resistor R1. The resistor R2 is connected between the inverting input terminal and output terminal of the current-voltage converting amplifier A1. A series circuit of the resistor R3 and the switching element S1 is connected to the resistor R2 in parallel. The switching element S1 turns ON or OFF in response to a switching signal from the control circuit section 40. Turning the switching element S1 OFF causes only the resistor R2 to be connected between the inverting input terminal and output terminal of the current-voltage converting amplifier A1, thus setting the amplification factor of the amplifier section 30 at a first amplification factor G1. Turning the switching element S1 ON causes the parallel circuit of the resistors R2 and R3 to be connected between the inverting input terminal and output terminal of the current-voltage converting amplifier A1, thus setting the amplification factor of the amplifier section 30 at a second amplification factor G2 which is lower than the first amplification factor G1.

The amplifier section 30 amplifies the output voltage V1 of the sensor 10 with either the first amplification factor G1 or the second amplification factor G2, and provides an output voltage V3 as the sum of the amplified output voltage V1 of the sensor 10 and a reference voltage V2.

In this embodiment, the first amplification factor G1 is set at a higher value than the second amplification factor G2. The resistance values of the resistors R1-R3 and other parameters are set such that the second amplification factor G2 becomes the minimum amplification factor of the amplifier section 30. In this case, to increase the differential voltage between the output voltage of the amplifier section 30 when the amplifier section 30 has its amplification factor set at the first amplification factor G1 and the output voltage of the amplifier section 30 when the amplifier section 30 has its amplification factor set at the second amplification factor G2, the difference between the first and second amplification factors G1 and G2 is suitably significant. In this embodiment, the first amplification factor G1 is 3,500x and the second amplification factor G2 is 2,700x. Also, the second amplification factor G2 is suitably the minimum amplification factor of the current-voltage converting amplifier A1. Setting the first amplification factor G1 at a relatively high value could cause the output voltage of the current-voltage converting amplifier A1 to be saturated. Thus, there is an upper limit to the setting of the first amplification factor G1. Therefore, setting the second amplification factor G2 as the minimum amplification factor of the current-voltage converting amplifier A1 allows the difference between the first amplification factor G1 and the second amplification factor G2 to be maximized. Note that these settings of the first amplification factor G1 and the second amplification factor G2 are only examples and may be changed as appropriate depending on the specification of the circuit, for example.

The control circuit section 40 is implemented, for example, as a microcomputer including a central processing unit (CPU) and a storage unit 43. In other words, the microcomputer performs the function of the control circuit section 40 by making its CPU execute a program stored in the storage unit 43. In this embodiment, the control circuit section 40 performs the functions of an output unit 41 and a setting unit 42. The control circuit section 40 further performs the function of driving the sensor 10 by controlling the operation of the driver circuit 60 with a control signal supplied thereto. In this embodiment, the program executed by the CPU is stored in advance in the storage unit 43 of the microcomputer. However, this is only an example and should not be construed as limiting. Alternatively, the program may also be downloaded via a telecommunications line such as the Internet or distributed after having been stored on a non-transitory storage medium such as a memory card.

The setting unit 42 sets the amplification factor of the amplifier section 30 at either the first amplification factor G1 or the second amplification factor G2 by turning the switching element S1 ON or OFF.

The storage unit 43 includes an electrically programmable nonvolatile memory such as an electrically erasable programmable read-only memory (EEPROM) or a flash memory. The storage unit 43 stores a program to be executed by the CPU, for example. In addition, the control circuit section 40 also makes the storage unit 43 store the first output voltage V31 of the amplifier section 30 when the setting unit 42 sets its amplification factor at the first amplification factor G1 and the second output voltage V32 of the amplifier section 30 when the setting unit 42 sets its amplification factor at the second amplification factor G2.

The output unit 41 provides an output voltage V4 based on a differential voltage between the first and second output voltages V31 and V32 stored in the storage unit 43. The output unit 41 according to this embodiment provides, as the output voltage V4, the differential voltage between the first and second output voltages V31 and V32.

### (2) Operation

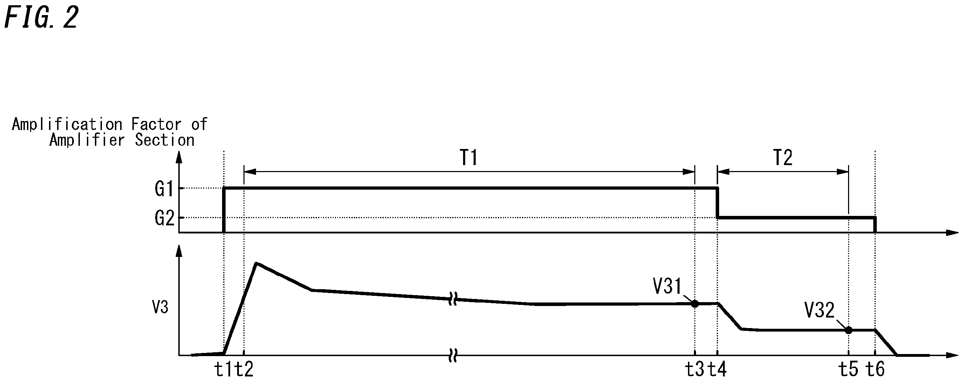

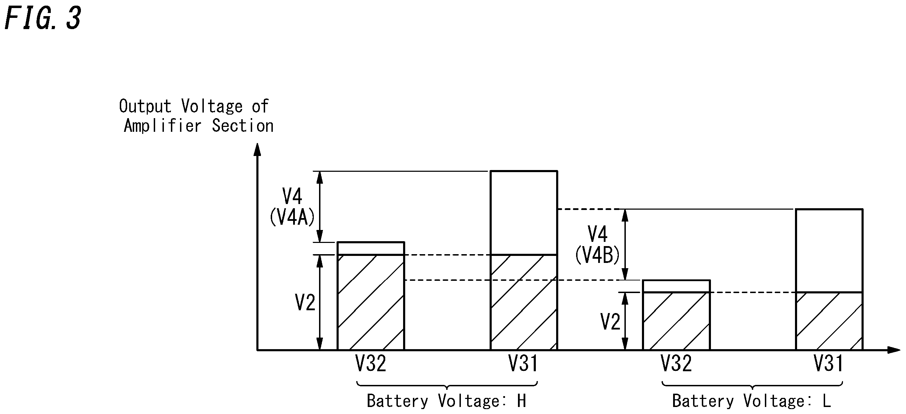

Next, it will be described with reference to FIGS. 2 and 3 how the sensor circuit 20 and sensor device 1 according to this embodiment operate.

The sensor circuit 20 according to this embodiment is powered by the battery 2, and therefore, the control circuit section 40 obtains a measured value of the sensor 10 every time a predetermined period of time (such as 60 seconds) passes, in order to reduce the power consumption.

The control circuit section 40 makes the sensor 10 operate for a predetermined amount of time (e.g., 4 seconds) by controlling the driver circuit 60 every predetermined period.

FIG. 2 is a timing diagram showing how the amplification factor of the amplifier section 30 and the output voltage V3 of the amplifier section 30 change while the driver circuit 60 is driving the sensor 10.

At a point in time t1, the driver circuit 60 starts supplying power to the sensor 10, when an output voltage V1 is generated at the output terminal of the sensor 10. The amplifier section 30 amplifies the output voltage V1 of the sensor 10, and provides an output voltage V3 as the sum of the amplified output voltage V1 of the sensor 10 and the reference voltage V2. At a point in time when power starts to be supplied to the sensor 10, the setting unit 42 of the control circuit section 40 turns the switching element S1 OFF to set the amplification factor of the amplifier section 30 at the first amplification factor G1. Thereafter, when the output voltage V1 of the sensor 10 is stabilized, the control circuit section 40 is loaded with the output voltage V3 of the amplifier section 30. It takes a period of time of about 2 seconds for the output voltage V1 of the sensor 10 to be stabilized since power starts to be supplied to the sensor 10. Thus, at a point in time t2 when an initial standby period (of a few ten milliseconds, for example) to activate the circuit passes since power starts to be supplied to the sensor 10, the control circuit section 40 starts counting a predetermined first standby period T1 (of 3 seconds, for example). At a point in time t3 when the first standby period T1 passes since the time t2, the control circuit section 40 makes the storage unit 43 store, as a first output voltage V31, the output voltage V3 provided by the amplifier section 30. In this case, the duration of the first standby period T1 may be reasonably longer than the amount of time it takes for the output voltage V1 of the sensor 10 to be stabilized, and may be changed as appropriate.

Next, at a point in time t4 after the first output voltage V31 has been stored in the storage unit 43, the setting unit 42 of the control circuit section 40 turns the switching element S1 ON to set the amplification factor of the amplifier section 30 at the second amplification factor G2. Thereafter, at a point in time t5 when a predetermined second standby period T2 (of 0.1 seconds, for example) passes since the point in time t4 when the amplification factor of the amplifier section 30 is set at the second amplification factor G2, the control circuit section 40 makes the storage unit 43 store, as a second output voltage V32, the output voltage V3 provided by the amplifier section 30. In this case, the duration of the second standby period T2 may be reasonably longer than the amount of time it takes for the output voltage V3 of the current-voltage converting amplifier A1 to be stabilized when the amplification factor is changed, and may be changed as appropriate. Note that since the output voltage V1 of the sensor 10 is already stabilized when the setting unit 42 sets the amplification factor of the amplifier section 30 at the second amplification factor G2, the second standby period T2 may be shorter than the first standby period T1.

When acquiring the first output voltage V31 when the amplifier section 30 has its amplification factor set at the first amplification factor G1 and the second output voltage V32 when the amplifier section 30 has its amplification factor set at the second amplification factor G2, the control circuit section 40 provides an output voltage V4 based on the differential voltage between the first output voltage V31 and the second output voltage V32. That is to say, the output unit 41 of the control circuit section 40 reads the first output voltage V31 and the second output voltage V32 from the storage unit 43, and provides the output voltage V4 based on the differential voltage between the first output voltage V31 and the second output voltage V32. In this embodiment, the output unit 41 provides, as the output voltage V4, the differential voltage between the first output voltage V31 and the second output voltage V32.

At a point in time t6 after the control circuit section 40 has been loaded with the second output voltage V32 from the amplifier section 30, the control circuit section 40 controls the driver circuit 60 to stop supplying power to the sensor 10.

Also, when a predetermined interval passes, the control circuit section 40 controls the driver circuit 60 to start supplying power to the sensor 10 again, and is loaded with the first output voltage V31 and the second output voltage V32 from the amplifier section 30. Then, the control circuit section 40 provides an output voltage V4 based on the differential voltage between the first output voltage V31 and the second output voltage V32.

The sensor device 1 according to this embodiment is used in a gas sensor. The gas sensor compares the output voltage V4 provided by the output unit 41 with a predetermined threshold voltage. When finding the output voltage V4 greater than the threshold voltage (i.e., when finding the concentration of the carbon monoxide gas exceeding a predetermined threshold value), the gas sensor sets off an alarm.

In this case, the voltage value of the reference voltage V2 is proportional to the voltage of the battery 2. Thus, as the voltage of the battery 2 decreases with the discharge of the battery 2, the reference voltage V2 also decreases. FIG. 3 illustrates how the first output voltage V31 and the second output voltage V32 provided by the amplifier section 30 change depending on whether the voltage of the battery 2 is high or low. Note that the output voltage V1 of the sensor 10 is supposed to be unchanged in the example illustrated in FIG. 3, no matter whether the voltage of the battery 2 is high or low.

As described above, as the voltage of the battery 2 decreases, the reference voltage V2 also decreases. The amplifier section 30 amplifies the output voltage V1 of the sensor 10, and provides an output voltage V3 as the sum of the amplified output voltage V1 of the sensor 10 and the reference voltage V2. Thus, supposing the output voltage V1 of the sensor 10 is unchanged, the output voltage V3 of the amplifier section 30 decreases when the voltage of the battery 2 is low, compared to when the voltage of the battery 2 is high.

With the battery 2 having the high voltage, the output unit 41 of the control circuit section 40 provides, as the output voltage V4A, the differential voltage between the first output voltage V31 when the amplifier section 30 has its amplification factor set at the first amplification factor G1 and the second output voltage V32 when the amplifier section 30 has its amplification factor set at the second amplification factor G2. In this case, the first output voltage V31 is the sum of the output voltage V1 of the sensor 10 amplified with the first amplification factor G1 and the reference voltage V2. The second output voltage V32 is the sum of the output voltage V1 of the sensor 10 amplified with the second amplification factor G2 and the reference voltage V2. Thus, the output voltage V4A that is the differential voltage between the first output voltage V31 and the second output voltage V32 comprises a term, which is obtained by multiplying the output voltage V1 of the sensor 10 by the difference (G1 - G2) between the first amplification factor G1 and the second amplification factor G2.

Meanwhile, with the battery 2 having the low voltage, the output unit 41 of the control circuit section 40 provides, as the output voltage V4B, the differential voltage between the first output voltage V31 when the amplifier section 30 has its amplification factor set at the first amplification factor G1 and the second output voltage V32 when the amplifier section 30 has its amplification factor set at the second amplification factor G2. In this case, the output voltage V4B that is the differential voltage between the first output voltage V31 and the second output voltage V32 also comprises a term, which is obtained by multiplying the output voltage V1 of the sensor 10 by the difference (G1 - G2) between the first amplification factor G1 and the second amplification factor G2.

This allows the concentration of the gas to be detected to be measured accurately.

In addition, the sensor circuit 20 according to this embodiment includes no power supply circuits such as a constant voltage circuit for generating a constant reference voltage V2 based on the voltage of the battery 2, thus cutting down the power consumption of the power supply circuit and eventually the power consumption of the sensor circuit 20 and the sensor device 1 including the sensor circuit 20.

In the sensor circuit 20 and sensor device 1 according to this embodiment, while the setting unit 42 sets the amplification factor of the amplifier section 30 at the first amplification factor G1, the control circuit section 40 is loaded with the first output voltage V31 from the amplifier section 30. On the other hand, while the setting unit 42 sets the amplification factor of the amplifier section 30 at the second amplification factor G2, the control circuit section 40 is loaded with the second output voltage V32 from the amplifier section 30. Thus, the sensor circuit 20 and sensor device 1 needs to include only one current-voltage converting amplifier A1, thus simplifying the circuit configuration of the amplifier section 30.

### (3) Variations

Next, variations of the sensor circuit and sensor device according to the embodiment described above will be enumerated one after another. Note that the configuration of any of the variations to be described below may be combined as appropriate with the configuration of the exemplary embodiment described above.

### (3.1) First variation

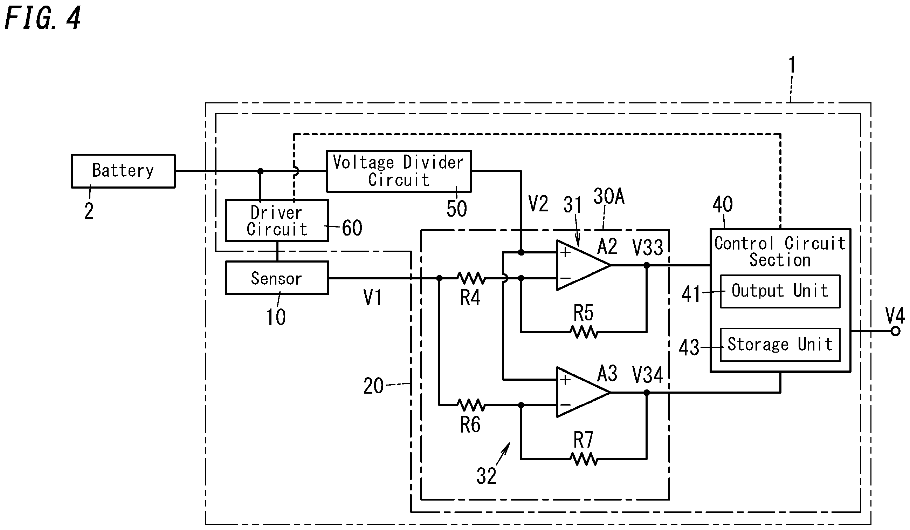

In the sensor circuit 20 and sensor device 1 according to the exemplary embodiment described above, the setting unit 42 sets the amplification factor of the amplifier section 30 at either the first amplification factor G1 or the second amplification factor G2. In this first variation, an amplifier section 30A of the sensor circuit 20 includes two amplifier circuits with different amplification factors as shown in FIG. 4. In the following description of the first variation, any constituent element of this first variation, having the same function as a counterpart of the sensor circuit 20 and sensor device 1 according to the embodiment described above, will be designated by the same reference numeral as that counterpart's, and a detailed description thereof will be omitted herein.

In the sensor circuit 20 according to this first variation, the amplifier section 30A includes a first amplifier circuit 31 having its amplification factor set at the first amplification factor G1 and a second amplifier circuit 32 having its amplification factor set at the second amplification factor G2.

The first amplifier circuit 31 is an inverting amplifier circuit including a current-voltage converting amplifier A2 and resistors R4 and R5. The non-inverting input terminal of the current-voltage converting amplifier A2 receives the reference voltage V2 from the voltage divider circuit 50 such that the potential at the non-inverting input terminal is biased toward the reference voltage V2. The inverting input terminal of the current-voltage converting amplifier A2 is connected to an output terminal of the sensor 10 via the resistor R4. The resistor R5 is connected between the inverting input terminal and output terminal of the current-voltage converting amplifier A2. In this variation, the resistance values of the resistors R4 and R5 and other parameters are set such that the amplification factor of the first amplifier circuit 31 becomes equal to the first amplification factor G1. The first amplifier circuit 31 amplifies the output voltage V1 of the sensor 10 with the first amplification factor G1, and provides an output voltage (first output voltage) V33 as the sum of the amplified output voltage V1 of the sensor 10 and the reference voltage V2 to the control circuit section 40.

The second amplifier circuit 32 is an inverting amplifier circuit including a current-voltage converting amplifier A3 and resistors R6 and R7. The second amplifier circuit 32 has the same circuit configuration as the first amplifier circuit 31, and therefore, description thereof will be omitted herein. In this variation, the resistance values of the resistors R6 and R7 and other parameters are set such that the amplification factor of the second amplifier circuit 32 becomes equal to the second amplification factor G2. The second amplifier circuit 32 amplifies the output voltage V1 of the sensor 10 with the second amplification factor G2, and provides an output voltage (second output voltage) V34 as the sum of the amplified output voltage V1 of the sensor 10 and the reference voltage V2 to the control circuit section 40.

The control circuit section 40 makes the sensor 10 operate for a predetermined amount of time (e.g., 4 seconds) by controlling the driver circuit 60 every predetermined period. When a predetermined standby period (of 3 seconds, for example) passes since power is supplied to the sensor 10, the control circuit section 40 is loaded with the first output voltage V33 and the second output voltage V34 from the first amplifier circuit 31 and the second amplifier circuit 32, respectively. Then, the output unit 41 of the control circuit section 40 provides, as the output voltage V4, the differential voltage between the first output voltage V33 and the second output voltage V34. When a predetermined period passes, the control circuit section 40 controls the driver circuit 60 to stop supplying power to the sensor 10.

Also, when a predetermined interval passes, the control circuit section 40 controls the driver circuit 60 to start supplying power to the sensor 10 again, and is loaded with the first output voltage V33 and the second output voltage V34 from the amplifier section 30A. Then, the control circuit section 40 provides, as the output voltage V4, the differential voltage between the first output voltage V33 and the second output voltage V34.

Optionally, the output unit 41 may multiply the differential voltage between the first output voltage V33 and the second output voltage V34 by a predetermined coefficient and provide, as the output voltage V4, the voltage thus obtained.

### (3.2) Other variations

In the exemplary embodiment and first variation of the sensor circuit 20 and sensor device 1, the sensor 10 is implemented as a gas sensor for detecting the presence of carbon monoxide. However, this is only an example and should not be construed as limiting. Alternatively, the sensor 10 may also be a sensor for detecting the presence of any other gas (such as a combustible gas), not just carbon monoxide gas. Besides, the sensor 10 does not have to be a gas sensor, either, but may also be a sensor for detecting an outbreak of fire by either smoke or elevated temperature. Still alternatively, the sensor 10 may even be a sensor for detecting temperature, humidity, or brightness, for example.

In the sensor circuit 20 according to the exemplary embodiment described above, the control circuit section 40 may be loaded with the second output voltage V32 every predetermined period with the amplification factor of the amplifier section 30 set at the second amplification factor G2 and then loaded with the first output voltage V31 with the amplification factor of the amplifier section 30 set at the first amplification factor G1.

Also, in the sensor circuit 20 according to the exemplary embodiment described above, the setting unit 42 sets the amplification factor of the amplifier section 30 at one of the two amplification factors. However, this is only an example and should not be construed as limiting. Alternatively, the setting unit 42 may also set the amplification factor of the amplifier section 30 at any one of three or more amplification factors. In that case, the output unit 41 is loaded with the output voltage V3 of the amplifier section 30 with the amplification factor of the amplifier section 30 set at each of the three or more amplification factors by the setting unit 42. Then, the output unit 41 may provide the output voltage V4 based on the differential voltage between any two of the plurality of output voltages V3 associated with those multiple amplification factors.

The sensor circuit 20 and sensor device 1 according to the exemplary embodiment described above are used in a gas sensor for setting off an alarm when finding the concentration of a gas to be detected greater than a predetermined threshold value. However, this is only an example and should not be construed as limiting. Alternatively, the sensor circuit 20 and sensor device 1 may also be used in a device for measuring the concentration of a gas to be detected.

### Reference Signs List

- 1: Sensor Device
- 2: Battery
- 10: Sensor
- 20: Sensor Circuit
- 30, 30A: Amplifier Section
- 40: Control Circuit Section
- 41: Output Unit
- 42: Setting Unit
- 43: Storage Unit
- G1: First Amplification Factor
- G2: Second Amplification Factor
- V1: Output Voltage of Sensor
- V2: Reference Voltage
- V3: Output Voltage of Amplifier Section
- V31, V33: First Output Voltage
- V32, V34: Second Output Voltage
- V4: Output Voltage of Output Unit

## Claims

1. A sensor circuit (20) comprising:
an amplifier section (30,30A) configured to amplify an output voltage (V1) of a sensor (10) and provide an output voltage (V3) as a sum of the amplified output voltage of the sensor (10) and a reference voltage (V2) ; and
an output unit (41) configured to provide an output voltage (V4) based on a differential voltage between a first output voltage (V31,V33) and a second output voltage (V32,V34) , the first output voltage (V31,V33) having a value of the output voltage of the amplifier section (30,30A) when the amplifier section (30,30A) has its amplification factor set at a first amplification factor (G1), the second output voltage (V32,V34) having another value of the output voltage of the amplifier section (30,30A) when the amplifier section (30,30A) has its amplification factor set at a second amplification factor (G2).

2. The sensor circuit (20) of claim 1, wherein
the reference voltage (V2) has a voltage value corresponding to a voltage value of a battery (2).

3. The sensor circuit (20) of claim 1 or 2, wherein
either the first amplification factor (G1) or the second amplification factor (G2) is a minimum amplification factor of the amplifier section (30,30A).

4. The sensor circuit (20) of any one of claims 1 to 3, further comprising:
a setting unit (42) configured to set the amplification factor of the amplifier section (30,30A); and
a storage unit (43) configured to store the first output voltage (V31) of the amplifier section (30,30A) when the setting unit (42) sets the amplification factor of the amplifier section (30,30A) at the first amplification factor (G1) and the second output voltage (V32) of the amplifier section (30,30A) when the setting unit (42) sets the amplification factor of the amplifier section (30,30A) at the second amplification factor (G2), wherein
the output unit (41) is configured to provide an output voltage (V4) based on a differential voltage between the first output voltage (V31) and the second output voltage (V32) that are stored in the storage unit (43).

5. The sensor circuit (20) of any one of claims 1 to 3, wherein
the amplifier section (30A) includes a first amplifier circuit (31) having its amplification factor set at the first amplification factor (G1) and a second amplifier circuit (32) having its amplification factor set at the second amplification factor (G2), and
the output unit (41) is configured to provide an output voltage based on a differential voltage between the first output voltage (V33) provided by the first amplifier circuit (31) and the second output voltage (V34) provided by the second amplifier circuit (32).

6. The sensor circuit (20) of any one of claims 1 to 5, wherein
the amplifier section (30,30A) includes a current-voltage converting amplifier (Al),
a non-inverting input terminal of the current-voltage converting amplifier (A1) receives the reference voltage (V2) such that the potential at the non-inverting input terminal is biased toward the reference voltage (V2), and
an inverting input terminal of the current-voltage converting amplifier (A1) is connected to an output terminal of the sensor (10) via a resistor (R1).

7. A method for operating a sensor circuit (20) including an amplifier section (30,30A) configured to amplify an output voltage of a sensor (10) and provide an output voltage as a sum of the amplified output voltage of the sensor (10) and a reference voltage (V2), the method comprising
providing an output voltage based on a differential voltage between a first output voltage and a second output voltage, the first output voltage having a value of the output voltage of the amplifier section (30,30A) when the amplifier section (30,30A) has its amplification factor set at a first amplification factor (G1), the second output voltage having another value of the output voltage of the amplifier section (30,30A) when the amplifier section (30,30A) has its amplification factor set at a second amplification factor (G2).

8. The method of claim 7, further comprising
providing an output voltage (V4) based on a differential voltage between the first output voltage (V31) of the amplifier section (30) when a setting unit (42) sets the amplification factor of the amplifier section (30) at the first amplification factor (G1) and the second output voltage (V32) of the amplifier section (30) when the setting unit sets (42) the amplification factor of the amplifier section (30) at the second amplification factor (G2),
the setting unit (42) being configured to set the amplification factor of the amplifier section (30).

9. The method of claim 7, wherein
the amplifier section (30A) includes: a first amplifier circuit (31) having its amplification factor set at the first amplification factor; and a second amplifier circuit (32) having its amplification factor set at the second amplification factor, and
the method further comprises providing an output voltage based on a differential voltage between the first output voltage (V33) provided by the first amplifier circuit (31) and the second output voltage (V34) provided by the second amplifier circuit (32).

10. A sensor device (1) comprising:
the sensor circuit (20) of any one of claims 1 to 4; and
the sensor (10) configured to provide the output voltage (V1) to the amplifier section (30,30A).

## Patentansprüche

1. Sensorschaltung (20), aufweisend:
einen Verstärkerabschnitt (30, 30A), der konfiguriert ist, um eine Ausgangsspannung (V1) eines Sensors (10) zu verstärken und eine Ausgangsspannung (V3) als eine Summe der verstärkten Ausgangsspannung des Sensors (10) und einer Referenzspannung (V2) vorzusehen; und
eine Ausgangseinheit (41), die konfiguriert ist, um eine Ausgangsspannung (V4) auf der Grundlage einer Differenzspannung zwischen einer ersten Ausgangsspannung (V31, V33) und einer zweiten Ausgangsspannung (V32, V34) vorzusehen, wobei die erste Ausgangsspannung (V31, V33) einen Wert der Ausgangsspannung des Verstärkerabschnitts (30, 30A) hat, wenn der Verstärkerabschnitt (30, 30A) seinen Verstärkungsfaktor auf einen ersten Verstärkungsfaktor (G1) eingestellt hat, wobei die zweite Ausgangsspannung (V32, V34) einen anderen Wert der Ausgangsspannung des Verstärkerabschnitts (30, 30A) hat, wenn der Verstärkerabschnitt (30, 30A) seinen Verstärkungsfaktor auf einen zweiten Verstärkungsfaktor (G2) eingestellt hat.

2. Sensorschaltung (20) nach Anspruch 1, wobei
die Referenzspannung (V2) einen Spannungswert hat, der einem Spannungswert einer Batterie (2) entspricht.

3. Sensorschaltung (20) nach Anspruch 1 oder 2, wobei
entweder der erste Verstärkungsfaktor (G1) oder der zweite Verstärkungsfaktor (G2) ein Mindestverstärkungsfaktor des Verstärkerabschnitts (30, 30A) ist.

4. Sensorschaltung (20) nach einem der Ansprüche 1 bis 3, ferner aufweisend:
eine Einstelleinheit (42), die konfiguriert ist, um den Verstärkungsfaktor des Verstärkerabschnitts (30, 30A) einzustellen; und
eine Speichereinheit (43), die konfiguriert ist, um die erste Ausgangsspannung (V31) des Verstärkerabschnitts (30, 30A) zu speichern, wenn die Einstelleinheit (42) den Verstärkungsfaktor des Verstärkerabschnitts (30, 30A) auf den ersten Verstärkungsfaktor (G1) einstellt, und die zweite Ausgangsspannung (V32) des Verstärkerabschnitts (30, 30A) zu speichern, wenn die Einstelleinheit (42) den Verstärkungsfaktor des Verstärkerabschnitts (30, 30A) auf den zweiten Verstärkungsfaktor (G2) einstellt, wobei
die Ausgangseinheit (41) konfiguriert ist, um eine Ausgangsspannung (V4) auf der Grundlage einer Differenzspannung zwischen der ersten Ausgangsspannung (V31) und der zweiten Ausgangsspannung (V32) vorzusehen, die in der Speichereinheit (43) gespeichert sind.

5. Sensorschaltung (20) nach einem der Ansprüche 1 bis 3, wobei
der Verstärkerabschnitt (30A) eine erste Verstärkerschaltung (31) enthält, deren Verstärkungsfaktor auf den ersten Verstärkungsfaktor (G1) eingestellt ist, und eine zweite Verstärkerschaltung (32), deren Verstärkungsfaktor auf den zweiten Verstärkungsfaktor (G2) eingestellt ist, und
die Ausgangseinheit (41) konfiguriert ist, um eine Ausgangsspannung auf der Grundlage einer Differenzspannung zwischen der ersten Ausgangsspannung (V33), die von der ersten Verstärkerschaltung (31) vorgesehen wird, und der zweiten Ausgangsspannung (V34), die von der zweiten Verstärkerschaltung (32) vorgesehen wird, vorzusehen.

6. Sensorschaltung (20) nach einem der Ansprüche 1 bis 5, wobei
der Verstärkerabschnitt (30, 30A) einen Strom-Spannungs-Umwandlungsverstärker (A1) enthält,
ein nicht-invertierender Eingangsanschluss des Strom-Spannungs-Umwandlungsverstärkers (A1) die Referenzspannung (V2) empfängt, so dass das Potenzial an dem nichtinvertierenden Eingangsanschluss in Richtung der Referenzspannung (V2) vorgespannt ist, und
ein invertierender Eingangsanschluss des Strom-Spannungs-Umwandlungsverstärkers (A1) über einen Widerstand (R1) mit einem Ausgangsanschluss des Sensors (10) verbunden ist.

7. Verfahren zum Betrieb einer Sensorschaltung (20), die einen Verstärkerabschnitt (30, 30A) enthält, der konfiguriert ist, um eine Ausgangsspannung eines Sensors (10) zu verstärken und eine Ausgangsspannung als eine Summe der verstärkten Ausgangsspannung des Sensors (10) und einer Referenzspannung (V2) vorzusehen, wobei das Verfahren umfasst:
Vorsehen einer Ausgangsspannung auf der Grundlage einer Differenzspannung zwischen einer ersten Ausgangsspannung und einer zweiten Ausgangsspannung, wobei die erste Ausgangsspannung einen Wert der Ausgangsspannung des Verstärkerabschnitts (30, 30A) hat, wenn der Verstärkerabschnitt (30, 30A) seinen Verstärkungsfaktor auf einen ersten Verstärkungsfaktor (G1) eingestellt hat, und die zweite Ausgangsspannung einen anderen Wert der Ausgangsspannung des Verstärkerabschnitts (30, 30A) hat, wenn der Verstärkerabschnitt (30, 30A) seinen Verstärkungsfaktor auf einen zweiten Verstärkungsfaktor (G2) eingestellt hat.

8. Verfahren nach Anspruch 7, ferner umfassend:
Vorsehen einer Ausgangsspannung (V4) auf der Grundlage einer Differenzspannung zwischen der ersten Ausgangsspannung (V31) des Verstärkerabschnitts (30), wenn eine Einstelleinheit (42) den Verstärkungsfaktor des Verstärkerabschnitts (30) auf den ersten Verstärkungsfaktor (G1) einstellt, und der zweiten Ausgangsspannung (V32) des Verstärkerabschnitts (30), wenn die Einstelleinheit (42) den Verstärkungsfaktor des Verstärkerabschnitts (30) auf den zweiten Verstärkungsfaktor (G2) einstellt,
wobei die Einstelleinheit (42) konfiguriert ist, um den Verstärkungsfaktor des Verstärkerabschnitts (30) einzustellen.

9. Verfahren nach Anspruch 7, wobei
der Verstärkerabschnitt (30A) enthält: eine erste Verstärkerschaltung (31), deren Verstärkungsfaktor auf den ersten Verstärkungsfaktor eingestellt ist; und eine zweite Verstärkerschaltung (32), deren Verstärkungsfaktor auf den zweiten Verstärkungsfaktor eingestellt ist, und
das Verfahren ferner ein Vorsehen einer Ausgangsspannung auf der Grundlage einer Differenzspannung zwischen der ersten Ausgangsspannung (V33), die von der ersten Verstärkerschaltung (31) vorgesehen wird, und der zweiten Ausgangsspannung (V34), die von der zweiten Verstärkerschaltung (32) vorgesehen wird, umfasst.

10. Sensorvorrichtung (1), aufweisend:
die Sensorschaltung (20) nach einem der Ansprüche 1 bis 4; und
den Sensor (10), der konfiguriert ist, um die Ausgangsspannung (V1) für den Verstärkerabschnitt (30, 30A) vorzusehen.

## Revendications

1. Circuit de capteur (20) comprenant :
une section d'amplificateur (30, 30A) configurée de manière à amplifier une tension de sortie (V1) d'un capteur (10) et à fournir une tension de sortie (V3) en tant qu'une somme de la tension de sortie amplifiée du capteur (10) et d'une tension de référence (V2) ; et
une unité de sortie (41) configurée de manière à fournir une tension de sortie (V4) sur la base d'une tension différentielle entre une première tension de sortie (V31, V33) et une seconde tension de sortie (V32, V34), la première tension de sortie (V31, V33) présentant une valeur de la tension de sortie de la section d'amplificateur (30, 30A) lorsque le facteur d'amplification de la section d'amplificateur (30, 30A) est réglé sur un premier facteur d'amplification (G1), la seconde tension de sortie (V32, V34) présentant une autre valeur de la tension de sortie de la section d'amplificateur (30, 30A) lorsque le facteur d'amplification de la section d'amplificateur (30, 30A) est réglé sur un second facteur d'amplification (G2).

2. Circuit de capteur (20) selon la revendication 1, dans lequel :
la tension de référence (V2) présente une valeur de tension correspondant à une valeur de tension d'une batterie (2).

3. Circuit de capteur (20) selon la revendication 1 ou 2, dans lequel :
soit le premier facteur d'amplification (G1), soit le second facteur d'amplification (G2), est un facteur d'amplification minimum de la section d'amplificateur (30, 30A).

4. Circuit de capteur (20) selon l'une quelconque des revendications 1 à 3, comprenant en outre :
une unité de réglage (42) configurée de manière à régler le facteur d'amplification de la section d'amplificateur (30, 30A) ; et
une unité de stockage (43) configurée de manière à stocker la première tension de sortie (V31) de la section d'amplificateur (30, 30A) lorsque l'unité de réglage (42) règle le facteur d'amplification de la section d'amplificateur (30, 30A) sur le premier facteur d'amplification (G1), et la seconde tension de sortie (V32) de la section d'amplificateur (30, 30A) lorsque l'unité de réglage (42) règle le facteur d'amplification de la section d'amplificateur (30, 30A) sur le second facteur d'amplification (G2), dans lequel
l'unité de sortie (41) est configurée de manière à fournir une tension de sortie (V4) sur la base d'une tension différentielle entre la première tension de sortie (V31) et la seconde tension de sortie (V32) qui sont stockées dans l'unité de stockage (43).

5. Circuit de capteur (20) selon l'une quelconque des revendications 1 à 3, dans lequel :
la section d'amplificateur (30A) inclut un premier circuit d'amplificateur (31) dont le facteur d'amplification est réglé sur le premier facteur d'amplification (G1), et un second circuit d'amplificateur (32) dont le facteur d'amplification est réglé sur le second facteur d'amplification (G2) ; et
l'unité de sortie (41) est configurée de manière à fournir une tension de sortie sur la base d'une tension différentielle entre la première tension de sortie (V33) fournie par le premier circuit d'amplificateur (31) et la seconde tension de sortie (V34) fournie par le second circuit d'amplificateur (32).

6. Circuit de capteur (20) selon l'une quelconque des revendications 1 à 5, dans lequel :
la section d'amplificateur (30, 30A) inclut un amplificateur de conversion de courant en tension (A1) ;
une borne d'entrée non inverseuse de l'amplificateur de conversion de courant en tension (A1) reçoit la tension de référence (V2) de sorte que le potentiel au niveau de la borne d'entrée non inverseuse est polarisé vers la tension de référence (V2) ; et
une borne d'entrée inverseuse de l'amplificateur de conversion de courant en tension (A1) est connectée à une borne de sortie du capteur (10) par l'intermédiaire d'une résistance (R1).

7. Procédé d'exploitation d'un circuit de capteur (20) incluant une section d'amplificateur (30, 30A) configurée de manière à amplifier une tension de sortie d'un capteur (10) et à fournir une tension de sortie en tant qu'une somme de la tension de sortie amplifiée du capteur (10) et d'une tension de référence (V2), le procédé comprenant l'étape ci-dessous consistant à :
fournir une tension de sortie sur la base d'une tension différentielle entre une première tension de sortie et une seconde tension de sortie, la première tension de sortie présentant une valeur de la tension de sortie de la section d'amplificateur (30, 30A) lorsque le facteur d'amplification de la section d'amplificateur (30, 30A) est réglé sur un premier facteur d'amplification (G1), la seconde tension de sortie présentant une autre valeur de la tension de sortie de la section d'amplificateur (30, 30A) lorsque le facteur d'amplification de la section d'amplificateur (30, 30A) est réglé sur un second facteur d'amplification (G2).

8. Procédé selon la revendication 7, comprenant en outre l'étape ci-dessous consistant à :
fournir une tension de sortie (V4) sur la base d'une tension différentielle entre la première tension de sortie (V31) de la section d'amplificateur (30), lorsqu'une unité de réglage (42) règle le facteur d'amplification de la section d'amplificateur (30) sur le premier facteur d'amplification (G1), et la seconde tension de sortie (V32) de la section d'amplificateur (30), lorsque l'unité de réglage (42) règle le facteur d'amplification de la section d'amplificateur (30) sur le second facteur d'amplification (G2) ;
l'unité de réglage (42) étant configurée de manière à régler le facteur d'amplification de la section d'amplificateur (30).

9. Procédé selon la revendication 7, dans lequel :
la section d'amplificateur (30A) inclut : un premier circuit d'amplificateur (31) dont le facteur d'amplification est réglé sur le premier facteur d'amplification, et un second circuit d'amplificateur (32) dont le facteur d'amplification est réglé sur le second facteur d'amplification ; et
le procédé comprend en outre l'étape consistant à fournir une tension de sortie sur la base d'une tension différentielle entre la première tension de sortie (V33) fournie par le premier circuit d'amplificateur (31) et la seconde tension de sortie (V34) fournie par le second circuit d'amplificateur (32).

10. Dispositif de capteur (1) comprenant :
le circuit de capteur (20) selon l'une quelconque des revendications 1 à 4 ; et
le capteur (10) configuré de manière à fournir la tension de sortie (V1) à la section d'amplificateur (30, 30A).
